**Europäisches Patentamt**

(19) **European Patent Office**

**Office européen des brevets**

(11) Veröffentlichungsnummer: **0 026 826**
**B1**

(12) **EUROPÄISCHE PATENTSCHRIFT**

(45) Veröffentlichungstag der Patentschrift:
**21.09.83**

(51) Int. Cl.³: **F 16 H 55/18**, B 29 D 15/00

(21) Anmeldenummer: **80104816.6**

(22) Anmeldetag: **14.08.80**

(54) Geräuscharmes Zahnradgetriebe und Formwerkzeug zum Herstellen von Stirnrädern hierfür.

(30) Priorität: **06.09.79 DE 2935984**

(43) Veröffentlichungstag der Anmeldung:
**15.04.81 Patentblatt 81/15**

(45) Bekanntmachung des Hinweises auf die Patenterteilung:
**21.09.83 Patentblatt 83/38**

(84) Benannte Vertragsstaaten:
**DE FR GB IT**

(56) Entgegenhaltungen:
**DE-C-675 352**
**GB-A-7 337**
**GB-A-713 847**
**US-A-2 696 743**
**US-A-3 548 673**

(73) Patentinhaber: **VDO Adolf Schindling AG,**
**Gräfstrasse 103, D-6000 Frankfurt/Main (DE)**

(72) Erfinder: **Mann, Arnold, Im Streitfeld 5, D-6465 Bieber**
**(DE)**

(74) Vertreter: **Könekamp, Herbert, Dipl.-Ing., Sodener**
**Strasse 9, D-6231 Schwalbach (DE)**

Geräuscharmes Zahnradgetriebe und Formwerkzeug zum Herstellen von Stirnrädern hierfür

Die Erfindung bezieht sich auf ein geräuscharmes Zahnradgetriebe, insbesondere für Messwerke, mit mindestens zwei miteinander kämmenden Stirnrädern, wobei jedes Stirnrad auf einer Stirnseite eine zur Radachse konzentrische Scheibe trägt, deren Durchmesser etwa dem Teilkreisdurchmesser des Strinrads entspricht und die radialen Laufflächen der beiden Scheiben unter federnder Vorspannung miteinander in Berührung stehen, sowie mit einem zwischen der Scheibe und der Stirnseite des Stirnrades angeordneten Zwischenstück.

Durch die aneinanderliegenden radialen Laufflächen werden die Stirnräder bei derartigen Zahngetrieben auf einem optimalen Achsabstand zueinander gehalten, so dass ein Klemmen der Stirnräder und damit ein Verschlechtern des Wirkungsgrades des Zahnradgetriebes vermieden wird.

Aus der US-A-2 696 743 ist ein derartiges Zahnradgetriebe bekannt. Dabei bestehen die Zähne des einen Stirnzahnrads aus zwischen zwei im Abstand zueinander angeordneten Ringflanschen angeordneten Bolzen. Durch die Ringflansche kann es bei einem axialen Versatz der Stirnzahnräder zur Reibung zwischen diesen Zahnrädern und damit zu unerwünschten Geräuschen und überträgungsverlusten führen. Darüber hinaus ist der aus vielen Einzelteilen bestehende Aufbau des Zahnradgetriebes aufwendig.

Bei aus der GB-A-713 847, der GB-A-7 337 A.D. 1915 und der US-A-3 548 673 bekannten Getrieben ist zwischen der Scheibe und der Stirnseite des Stirnrades kein Zwischenstück angeordnet, was bei einem z.B. toleranzbedingten axialen Versatz der Stirnräder ebenfalls zu einer nachteiligen Reibung zwischen der Scheibenstirnseite des einen Stirnrades und der Stirnseite des anderen Stirnrades und damit zu unerwünschten Geräuschen und Übertragungsverlusten führen könnte.

Es ist daher Aufgabe der Erfindung ein geräuscharmes Zahnradgetriebe zu schaffen, das keine unerwünschten Übertragungsverluste aufweist.

Diese Aufgabe wird erfindungsgemäss dadurch gelöst, dass das Zwischenstück in Form eines Stirnzahnrades ausgebildet ist, dessen Fusskreisdurchmesser gleich dem des Getriebestirnrades ist, dessen Zähne gleiche Dicke und gleichen Abstand wie das Getriebestirnrad haben und dessen Aussenkreisdurchmesser gleich dem Teilkreisdurchmesser des Getriebestirnrades gewählt ist. Unerwünschte Übertragungsverluste durch Reibung zwischen den beiden Teilen des Zahnradgetriebes sind nicht mehr möglich, da die axiale Aneinanderlage dieser Teile vermieden wird.

Gleichzeitig wird aber auch ungleichmässiger Verschleiss der Zahnflanken über deren Breite bei axial versetzten Stirnrädern und damit eine zu erhöhten Übertragungsverlusten führende Reibungserhöhung an den Zahnflanken weitgehend vermieden, da die Zähne des Zwischenstücks mit zum Tragen der Zahne des Gegenrades herangezogen werden.

Um auch bei der Übertragung grösserer Drehmomente bzw. von Drehmomentspitzen sicher zu stellen, dass keine Klemmungen zwischen den Rädern auftreten können, empfiehlt es sich, den Durchmesser jeder Scheibe geringfügig grösser als den Teilkreisdurchmesser des Stirnrades zu wählen. Als geringfügig grösser wird bei Zahnrädern für übliche Messwerks- und Uhrengetriebe ein Mass von 0,05 bis 0,2 mm angesehen.

Als zweckmässig hat es sich erwiesen, dass das Stirnrad, die Scheibe und das Zwischenstück eine einstückige Einheit bilden, die aus einem thermoplastischen Kunststoff oder einem anderen giess-, spritz-oder pressfähigen Material sein kann. Dabei ist es in besonders einfacher Weise möglich, die Stirnrad-Scheiben-Zwischenstück-Einheit in einem einzigen Arbeitsgang und insbesondere ohne jegliche zusätzliche spanabhebende Massnahmen herzustellen. Zur Herstellung einer solchen Stirnrad-Zwischenstück-Scheiben-Einheit aus einem giess-, spritz-oder pressfähigen Material, insbesondere aus einem thermoplastischen Kunststoff, ist nach einem weiteren Gedanken der Erfindung ein Formwerkzeug vorgesehen, das zweiteilig im einen Teil der Form für die Scheibe und das zahnförmige Zwischenstück und im anderen Teil die Form für das Stirnrad und die Ansätze für die Lücken des zahnradförmigen Zwischenstücks aufnehmend aufgebaut ist.

Die Stirnrad-Zwischenstück-Scheiben-Einheit ist also in einem Einfachwerkzeug ohne Schieber und andere die Herstellung des Werzeugs komplizierenden Teile herstellbar, wobei aufgrund des einfachen Aufbaus des Werkzeugs dieses mit hohen Taktzeiten genutzt werden kann.

Die Erfindung sei anhand der Zeichnung, die in zum Teil schematischer Darstellung ein Ausführungsbeispiel enthält, näher erläutert. Es zeigen
Fig. 1 eine Seitenansicht eines aus zwei Stirnrädern bestehenden Getriebes,
Fig. 2 einen Querschnitt durch ein Stirnrad des Getriebes gemäss Fig. 1 entlang der Linie II-II.
Fig. 3 einen Querschnitt durch ein Zahnrad des Getriebes nach Fig. 1 entlang der Linie III-III und
Fig. 4 einen Schnitt durch ein Formwerkzeug zum Herstellen eines Stirnrades des Getriebes gemäss Fig. 1.
Von dem geräuscharmen Zahnradgetriebe 1, das aus einer Anzahl von einzelnen Stirnrädern besteht, sind der Übersichtlichkeit halber lediglich die Stirnräder 2 und 3 dargestellt, von denen jedes auf einer Welle 4 bzw. 5 sitzt. Beide Wellen 4 und 5 sind über ein federelastisches Element 6 miteinander verbunden, derart, dass die beiden Stirnräder gegeneinander gedrückt werden.

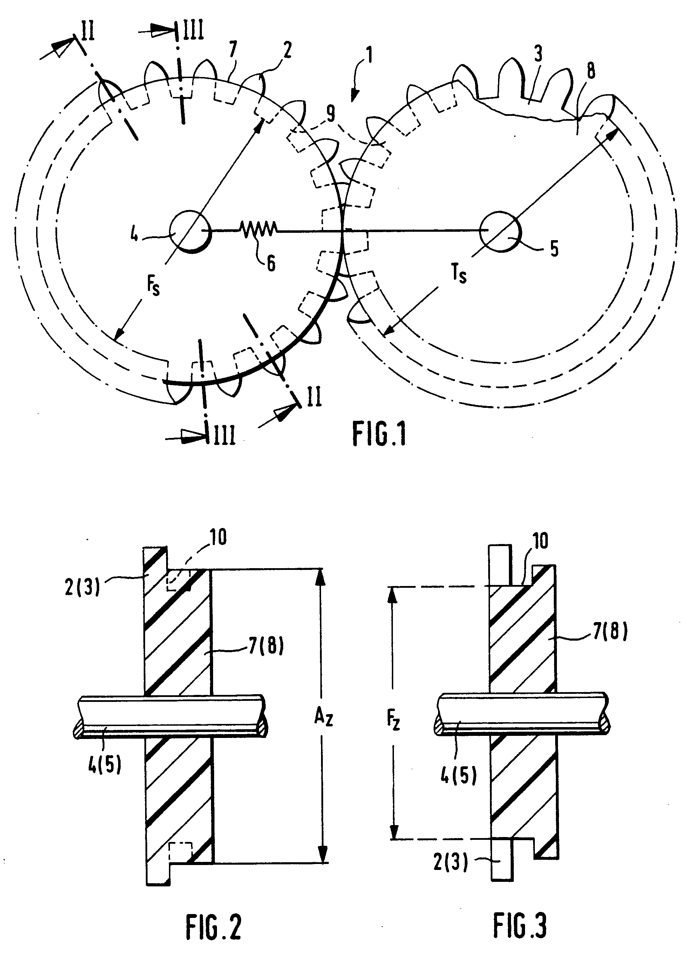

Wie insbesondere aus den Fig. 2 und 3 hervorgeht, ist jedes der beiden Stirnräder 2 bzw. 3 mit einer zur Welle 4 bzw. konzentrischen Scheibe 7 bzw. 8 versehen, deren Durchmesser gleich dem Teilkreisdurchmesser des Stirnrades 2 bzw. 3 gewählt ist. Diese beiden Scheiben 7 und 8 bewirken, dass die Zähne 9 der Zahnräder nur begrenzt ineinander eintauchen und somit keine Klemmungen zwischen den beiden Zahnrädern auftreten können.

Zwischen jeder Scheibe 7 bzw. 8 und dem ihr zugeordneten Stirnrad 2 bzw. 3 befindet sich ein zylindrisches Zwischenstück 10, dessen Kontur so gewählt ist, dass zumindest im Bereich der Zahnlücken des Stirnrades 2 bzw. 3 das Zwischenstück nicht wirksam ist, also ein mit dem Stirnrad 2 bzw. 3 kämmendes Zahnrad gegenüber dem Stirnrad axial versetzt sein oder eine grössere Dicke als das Stirnrad aufweisen kann, ohne dass dadurch der Ablauf der beiden Zahnräder gegeneinander gehemmt wird. Diese Kontur wird dadurch erreicht, dass das Zwischenstück in Form eines Stirnrades ausgebildet ist, dessen Fusskreisdurchmesser $F_z$ gleich dem Fusskreisdurchmesser $F_s$ des Stirnrades 2 bzw. 3 gewählt ist, bei dem die Zähne gleiche Dicke und gleichen Abstand wie die Zähne 9 des Stirnrades 2 bzw. 3 haben und dessen Aussenkreisdurchmesser $A_z$ gleich dem Teilkreisdurchmesser $T_s$ des Stirnrades 2 bzw. 3 ist.

Aufgrund dieser Ausbildung des Zwischenstücks 10 besteht die Möglichkeit, das Zwischenstück, die Scheibe und das Stirnrad in Form einer einstückigen Einheit aus einem thermoplastischen Kunststoff im Spritzgiess- bzw. Spritzpressverfahren herzustellen.

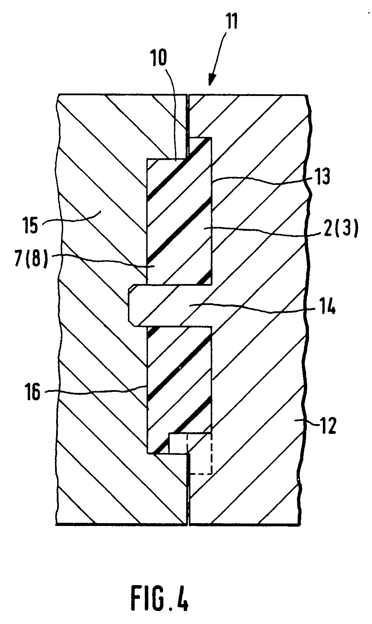

Eine solche Einheit aus Stirnrad, Zwischenstück und Scheibe kann billig und in grossen Stückzahlen in einem zweiteiligen Werkzeug 11, wie es in Fig. 4 dargestellt ist, hergestellt werden. In dem einen Teil 12 des Werkzeugs befindet sich hierbei die Form 13 für das Stirnrad sowie ein Zapfen 14 zur Erzielung des die Welle 4 bzw. 5 aufnehmenden zentrischen Lochs, während im anderen Teil 15 sich die Form 16 für die Scheibe und das Zwischenstück befindet. Zur Erzielung der gewünschten vorbeschriebenen Umfangsform des Zwischenstücks 10 sind die in die Zahnlücken des Stirnrades reichenden Ansätze in der Form 13 im Umfangsbereich des Zwischenstücks bis zur Stirnfläche der Scheibe verlängert, wie sich aus dem unteren Teil der Figur 4 ergibt.

### Patentansprüche

1. Geräuscharmes Zahnradgetriebe, insbesondere für Messwerke, mit mindestens zwei miteinander kämmenden Stirnrädern (2, 3), wobei jedes Stirnrad auf einer Stirnseite eine zur Radachse konzentrische Scheibe (7, 8) trägt, deren Durchmesser etwa dem Teilkreisdurchmesser ($T_s$) des Stirnrades entspricht und die radialen Laufflächen der beiden Scheiben unter federnder Vorspannung miteinander in Berührung stehen, sowie mit einem zwischen der Scheibe (7, 8) und der Stirnseite des Stirnrades (2, 3) angeordneten Zwischenstück (10), dadurch gekennzeichnet, dass das Zwischenstück (10) in Form eines Stirnrades ausgebildet ist, dessen Fusskreisdurchmesser ($F_z$) gleich dem des Getriebestirnrades (2, 3) ist, dessen Zähne gleiche Dicke und gleichen Abstand wie das Getriebestirnrad haben und dessen Aussenkreisdurchmesser ($A_z$) gleich dem Teilkreisdurchmesser ($T_s$) des Getriebestirnrades (2, 3) gewählt ist.

2. Zahnradgetriebe nach Anspruch 1, dadurch gekennzeichnet, dass der Durchmesser jeder Scheibe (7, 8) geringfügig grösser als der Teilkreisdurchmesser ($T_s$) des Stirnrades (2, 3) ist.

3. Zahnradgetriebe nach einem der Ansprüche 1 und 2, dadurch gekennzeichnet, dass das Stirnrad (2, 3), die Scheibe (7, 8) und das Zwischenstück (10) eine einstückige Einheit bilden.

4. Formwerkzeug zum Herstellen von Stirnrädern eines Zahnradgetriebes nach Anspruch 3, aus einem giess-spritz- oder pressfähigen Material, insbesondere aus einem thermoplastischen Kunststoff, dadurch gekennzeichnet, dass das Werzeug (11) zweiteilig, im einen Teil (15) die Form (16) für die Scheibe (7, 8) und das zahnradförmige Zwischenstück (10) und im anderen Teil (12) die Form (13) für das Stirnrad (2, 3) und die Ansätze für die Lücken des zahnradförmigen Zwischenstücks (10) aufnehmend aufgebaut ist.

### Revendications

1. Engrenage silencieux, en particulier pour instruments de mesure, comportant au moins deux pignons droits (2, 3) engrenant l'un dans l'autre, chaque pignon droit supportant à une face extrême un disque (7; 8) concentrique à l'axe dudit pignon et dont le diamètre correspond sensiblement au diamètre primitif de référence ($T_s$) du pignon droit, les faces radiales de roulement des deux disques étant en contact mutuel sous une précharge élastique et une pièce intercalaire (10) étant disposée entre le disque (7; 8) et la face extrême du pignon droit (2, 3), engrenage caractérisé par le fait que la pièce intercalaire (10) est réalisée sous la forme d'un pignon droit denté, dont le diamètre du pied ($F_z$) est égal à celui du pignon droit (2, 3) de l'engrenage, dont les dents ont la même épaisseur et le même espacement que le pignon droit de l'engrenage et dont le diamètre ($A_z$) de la circonférence externe est choisi égal au diamètre primitif de référence ($T_s$) du pignon droit (2, 3) de l'engrenage.

2. Engrenage selon la revendication 1, caractérisé par le fait que le diamètre de chaque disque (7, 8) est sensiblement plus grand que le diamètre primitif de référence ($T_s$) du pignon droit 2, 3).

3. Engrenage selon l'une des revendications 1 et 2, caractérisé per le fait que le pignon droit (2, 3), le disque (7, 8) et la pièce intercalaire (10) forment un ensemble d'un seul tenant.

4. Outil de moulage pour la fabrication de pignons droits d'un engrenage selon la revendication 3, en une matière pouvant être coulée, injectée ou pressée, en particulier une matière thermoplastique, caractérisé par le fait que l'outil (11) est réalisé en deux parties et présente dans l'une (15) de ses parties le moule (16) pour le disque (7, 8) et la pièce intercalaire (10) en forme de pignon denté, et comporte dans son autre partie (12) le moule (13) pour le pignon droit (2, 3) et les saillies pour les entredents de la pièce intercalaire (10) en forme de pignon denté.

## Claims

1. Low-noise toothed-wheel gearing, especially for measuring instruments, with at least two intermeshing spur wheels (2, 3), each spur wheel carrying on one end face a disc (7; 8) which is concentric to the wheel axis and the diameter of which corresponds approximately to the pitch circle diameter (Ts) of the spur wheel, and the radial running surfaces of the two discs being in contact with one another under resilient prestress, and with an intermediate piece (10) located between the disc (7; 8) and the end face of the spur wheel (2; 3), characterised in that the intermediate piece (10) is designed in the form of a spur gear wheel, the root circle diameter (Fz) of which is equal to that of the spur wheel (2, 3) of the gearing, and the teeth of which have the same thickness and the same distance between them as the spur wheel of the gearing and the outer-circle diameter (Az) of which is selected to be equal to the pitch circle diameter (Ts) of the spur wheel (2, 3) of the gearing.

2. Toothed-wheel gearing according to Claim 1, characterised in that the diameter of each disc (7, 8) is slightly larger than the pitch circle diameter (Ts) of the spur wheel (2, 3).

3. Toothed-wheel gearing according to one of the Claims 1 and 2, characterised in that the spur wheel (2, 3), the disc (7, 8) and the intermediate piece (10) form a one-piece unit.

4. Mould device for producing spur wheels of a toothed-wheel gearing according to Claim 3 from a material capable of being cast, injection-moulded or pressed, especially from a thermoplastic, characterised in that the device (11) is made in two parts to receive in one part (15) the mould (16) for the disc (7, 8) and for the intermediate piece (10) in the form of a gear wheel, and in the other part (12) the mould (13) for the spur wheel (2, 3) and for the projections for the gaps of the intermediate piece (10) in the form of a gear wheel.

FIG.1

FIG.2

FIG.3

FIG.4